(19) Europäisches Patentamt

European Patent Office

Office européen des brevets

(11) **EP 0 815 925 B1**

(12) **EUROPEAN PATENT SPECIFICATION**

(45) Date of publication and mention of the grant of the patent:
**01.12.2004   Bulletin 2004/49**

(51) Int Cl.⁷: **B01D 53/94**, F01N 3/08

(21) Application number: **97111220.6**

(22) Date of filing: **03.07.1997**

(54) **Apparatus for purifying exhaust gases emitted from a diesel engine**

Vorrichtung zur Reinigung der Abgasen eines Dieselmotors

Appareil pour purifier les gaz d'échappement d'un moteur Diesel

(84) Designated Contracting States:
**DE FR GB**

(30) Priority:  **04.07.1996  JP  17487096**

(43) Date of publication of application:
**07.01.1998   Bulletin 1998/02**

(73) Proprietor: **TOYOTA JIDOSHA KABUSHIKI KAISHA**
**Toyota-shi, Aichi-ken 471-8571 (JP)**

(72) Inventors:
  • **Ogawa, Osamu**
  **Toyota-shi, Aichi-ken (JP)**
  • **Nagami, Tetsuo**
  **Toyota-shi, Aichi-ken (JP)**

(74) Representative:
**Leson, Thomas Johannes Alois, Dipl.-Ing. et al**
**Patentanwälte**
**Tiedtke-Bühling-Kinne & Partner,**
**Bavariaring 4**
**80336 München (DE)**

(56) References cited:
**EP-A- 0 613 714        EP-A- 0 773 056**
**EP-B- 0 773 056        US-A- 4 315 895**

• **DATABASE WPI Section Ch, Week 9715 Derwent Publications Ltd., London, GB; Class H06, AN 97-162790 XP002043026 & JP 09 032 539 A (CATALER IND CO LTD) , 4 February 1997**
• **PATENT ABSTRACTS OF JAPAN vol. 008, no. 262 (M-341), 30 November 1984 & JP 59 134312 A (MITSUBISHI JIDOSHA KOGYO KK), 2 August 1984,**
• **PATENT ABSTRACTS OF JAPAN vol. 016, no. 474 (M-1319), 2 October 1992 & JP 04 171215 A (TOYOTA MOTOR CORP), 18 June 1992,**
• **PATENT ABSTRACTS OF JAPAN vol. 013, no. 447 (C-642), 6 October 1989 & JP 01 171626 A (NIPPON SHOKUBAI KAGAKU KOGYO CO LTD), 6 July 1989,**

**Description**

Field of the Invention

The present invention relates to an apparatus for oxidizing and purifying at least hydrocarbons (hereinafter abbreviated to as "HC"), included in an exhaust gas emitted from a diesel engine, and for further inhibiting precursors of sulfates (i.e., $SO_3$, $SO_4^{2-}$, $H_2SO_4$, etc.) from being emitted and the use of the apparatus. It is possible for an apparatus according to the present invention to maintain not only the HC oxidizing performance but also the sulfate-precursor emission controlling performance for a long period of time.

Description of the Related Art

Concerning gasoline engines, the harmful components included in the exhaust gases emitted therefrom have been reduced steadily, because of severe regulations to control the exhaust gases, and because of the development of technologies to comply with the regulations.

On the other hand, the exhaust gases emitted from diesel engines have been controlled under less stricter regulations than those emitted from gasoline engines, and the technologies for processing the exhaust gases emitted from diesel engines have been developed slower so far than those for the exhaust gases emitted from gasoline engines, because of the special circumstances: namely; diesel engines emit the harmful substances mainly as particulates. Thus, there has been a long-felt need for developing a catalyst which can securely purify the exhaust gases emitted from diesel engines.

As conventional apparatuses developed so far for purifying the exhaust gases emitted from diesel engines, there have been known an apparatus using a trapping element, and an open type oxidizing catalyst. The apparatus using a trapping element can be classified into an apparatus free from a catalyst, and an apparatus provided with a catalyst.

The conventional trapping type apparatus captures the diesel particulates, included in exhaust gases emitted from diesel engines, in order to inhibit them from being emitted to the outside, and is especially effective to the exhaust gases of high dry-soot content. However, the conventional trapping type apparatus requires a recycling apparatus for burning the captured diesel particulates. Accordingly, in view of actual application, there still remain the following problems associated with the conventional trapping type apparatus: namely; its DPF (i.e., diesel particulates filter) is cracked during the recycling operation; its DPF is clogged by ashes; and the conventional trapping type apparatus itself complicates an exhaust system inevitably.

Whilst, one of the open type oxidizing catalysts is disclosed in Japanese Unexamined Patent Publication (KOKAI) No. 1-171,626, for example. As set forth in the publication, similarly to catalysts for purifying exhaust gases emitted from gasoline engines, a catalyst is utilized which comprises a catalyst carrier layer formed of activated alumina, etc., and a catalyst ingredient, such as a platinum-group catalyst ingredient, etc., loaded on the catalyst carrier layer. This open type oxidizing catalyst has a disadvantage in that it removes the dry soot with a low removing rate. However, the quantity of dry soot can be reduced by improving diesel engines or fuels themselves. In addition, engineers have been studying the open type oxidizing catalyst intensively so far, because of a big advantage: namely; no recycling apparatus is required of the open type oxidizing catalyst. Thus, a further engineering improvement is longed for the open type oxidizing catalyst.

Although the open type oxidizing catalyst can efficiently decompose soluble organic fractions (hereinafter abbreviated to "SOF") at elevated temperatures, it suffers from a disadvantage in that its catalyst ingredient exhibits a poor catalytic activity at low temperatures to show deteriorated SOF purifying performance. When an engine is started or operated idly where the temperature of an exhaust gas is low, SOF are not decomposed but turned into soot. Consequently, there arises a phenomenon that the resulting soot deposits in the honeycomb-shaped cellular passages of the catalyst support of the open type oxidizing catalyst. As a result, there arises a disadvantage in that the open type oxidizing catalyst is clogged by the deposited soot to suffer from deteriorated catalytic performance.

Moreover, when the open type oxidizing catalyst is improved in terms of the oxidizing performance so that the HC and SOF purifying performance can be enhanced at low temperatures, it suffers from another problem in that the emission of particulates may be enlarged: namely; $SO_2$ is oxidized to produce $SO_3$, $SO_4^{2-}$, $H_2SO_4$, etc., in a high-temperature range, and the resulting $SO_3$, $SO_4^{2-}$, $H_2SO_4$, etc., adversely increase the emission of particulates. This drawback results from the fact that the $SO_2$ is not measured as particulates, but $SO_3$, $SO_4^{2-}$, $H_2SO_4$, etc., are measured as particulates. Especially, in the exhaust gases emitted from diesel engines, gaseous oxygen exists in a sufficient amount so that the oxidation of $SO_2$ is likely to take place.

In order to solve the problems associated with the conventional apparatuses for purifying the exhaust gases emitted from diesel engines, Japanese Unexamined Patent Publication (KOKAI) No. 4-171,215 discloses a novel exhaust gas purifying apparatus in which an $SO_2$ trap for capturing $SO_2$ is disposed on an upstream side with respect to an oxidizing catalyst in an exhaust system. In the novel exhaust gas purifying apparatus, the $SO_2$ trap includes active alumina, and a base metal. In accordance with the novel exhaust gas purifying apparatus, $SO_2$, included in an exhaust gas, is reacted with the base metal, and is captured by the $SO_2$ trap. Consequently, an exhaust gas, being free from the $SO_2$ component, is supplied to the oxidizing catalyst. As a result, $SO_3$, $SO_4^{2-}$, $H_2SO_4$, etc., are inhibited from generating.

However, in the novel exhaust gas purifying apparatus disclosed in Japanese Unexamined Patent Publication (KOKAI) No. 4-171,215, the $SO_2$ captured by the $SO_2$ trap accumulates, and the accumulation reaches the saturated state eventually. When the accumulation is saturated, it is difficult for the $SO_2$ trap to capture $SO_2$ more than the saturated accumulation. Accordingly, $SO_2$, not captured by the $SO_2$ trap, flows to the downstream side, and is oxidized by the oxidizing catalyst to inevitably generate $SO_3$, $SO_4^{2-}$, $H_2SO_4$, etc. As a result, it is hard for the novel exhaust gas purifying apparatus to keep the particulate-generation inhibiting function for a long period of time.

JP-A-59134312 discloses an apparatus for purifying an exhaust gas emitted from a diesel engine, comprising an oxidizing catalyst disposed on an upstream side in an exhaust system of a diesel engine, and being capable of oxidizing and purifying at least HC (i.e. hydrocarbons) included in an exhaust gas emitted from the diesel engine; and a sulfate-storing unit (B) being capable of capturing precursors of sulfates, generated at said oxidizing catalyst, as sulfates.

EP-A-0773056 which is a post-published document according to Art. 54(3) EPC discloses a process for purifying an exhaust gas emitted from a diesel engine, comprising: oxidizing sulfur dioxide comprised in an exhaust gas into precursors of sulfates by using an oxidizing catalyst disposed on an upstream side in an exhaust system of a diesel engine, and being capable of oxidizing and purifying at least hydrocarbons included in an exhaust gas emitted from the diesel engine; capturing said precursor of sulfates as sulfates by using a catalyst, wherein said process comprises further reducing the captured sulfates to sulfur dioxide.

## SUMMARY OF THE INVENTION

The present invention has been developed in view of the aforementioned circumstances. It is therefore an object of the present invention to provide an apparatus for purifying an exhaust gas emitted from a diesel engine, apparatus which is good in terms of the HC and SOF purifying performance, and which can inhibit the precursors of sulfates (i.e., $SO_3$, $SO_4^{2-}$, $H_2SO_4$, etc.) from being emitted for a long period of time.

An apparatus for purifying an exhaust gas emitted from a diesel engine can carry out the aforementioned object, and comprises:

an oxidizing catalyst disposed on an upstream side in an exhaust system of a diesel engine, and being capable of oxidizing and purifying at least HC included in an exhaust gas emitted from the diesel engine; and

a sulfate-storing-and-reducing catalyst being not only capable of capturing precursors of sulfates, generated at said oxidizing catalyst, as sulfates, but also capable of reducing the captured sulfates to sulfur dioxide ($SO_2$), and disposed on a downstream side with respect to said oxidizing catalyst in the exhaust system.

In the present exhaust gas purifying apparatus, the exhaust gas emitted from a diesel engine is first brought into contact with the oxidizing catalyst. Accordingly, HC, CO and SOF, included in the exhaust gas, are oxidized by the oxidizing catalyst, and purified to $H_2O$, $CO_2$, etc. Moreover, $SO_2$, included in the exhaust gas, is also oxidized by the oxidizing catalyst to generate the precursors of sulfates (i.e., $SO_3$, $SO_4^{2-}$, $H_2SO_4$, etc.

However, the sulfate-storing-and-reducing catalyst is disposed on a downstream side with respect to the oxidizing catalyst in the exhaust system. The resulting precursors of sulfates (i.e., $SO_3$, $SO_4^{2-}$, $H_2SO_4$, etc.) are stored as sulfates on the sulfate-storing-and-reducing catalyst. Thus, $SO_3$, $SO_4^{2-}$, $H_2SO_4$, etc., are kept from being emitted to the outside. In addition, the sulfates, which result from $SO_3$, $SO_4^{2-}$, $H_2SO_4$, etc., are decomposed by the sulfate-storing-and-reducing catalyst to $SO_2$ at relatively low temperatures, and the resulting $SO_2$ is subsequently emitted to the outside. Thus, the sulfates are inhibited from being accumulated on the sulfate-storing-and-reducing catalyst. Hence, the sulfate-storing-and-reducing action of the sulfate-storing-and-reducing catalyst can be kept for a long period of time. As a result, the present exhaust gas purifying apparatus can inhibit $SO_3$, $SO_4^{2-}$, $H_2SO_4$, etc., from being emitted to the outside for a long period of time.

As having described so far, the present exhaust gas purifying apparatus can not only oxidize and purify HC, CO and SOF in the same manner as the conventional exhaust gas purifying apparatuses, but also can capture the sulfates, which are derived from $SO_3$, $SO_4^{2-}$, $H_2SO_4$, etc., to keep them from being emitted to the outside. In addition, the captured sulfates are reduced to $SO_2$, and are emitted as $SO_2$ to the outside. Hence, the sulfate-capturing function of the sulfate-storing-and-reducing catalyst can be recovered. All in all, the sulfate-capturing function of the present exhaust gas purifying apparatus, and the reducing function thereof can be held for a long period of time.

The objects above are achieved by providing an apparatus according to one of claims 1 and 5 and by the use of an apparatus according to one of claims 1 to 9. Preferred embodiments are set forth in the dependent claims.

## BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:

Fig. 1 is a block diagram for schematically illustrating an arrangement of a First Preferred Embodiment of an exhaust gas purifying apparatus according to the present invention; and
Fig. 2 is a block diagram for schematically illustrating an arrangement of a modified version of the preferred embodiments of the present exhaust gas purifying apparatus.

## DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

In the present exhaust gas purifying apparatus, the oxidizing catalyst oxidizes HC, CO and SOF, included in an exhaust gas emitted from a diesel engine, to convert them into $H_2O$ and $CO_2$, thereby purifying the exhaust gas. As the oxidizing catalyst, it is possible to employ the same oxidizing catalysts as the conventional open type oxidizing catalysts. For example, the oxidizing catalyst can be exemplified by one which includes a porous catalyst support, and a catalyst ingredient loaded on the porous catalyst support. The porous catalyst support can be formed of alumina ($Al_2O_3$), silica ($SiO_2$), silica-alumina (or a composite oxide of silica and alumina), zirconia ($ZrO_2$), titania ($TiO_2$), or zeolite. The catalyst ingredient can be at least one member selected from the group consisting of platinum (Pt), rhodium (Rh), palladium (Pd), ruthenium (Ru), iridium (Ir), etc.

In the oxidizing catalyst, the catalyst ingredient can preferably be loaded on the porous catalyst support in an amount of from 0.1 to 20 grams, further preferably from 1 to 5 grams, with respect to 1 liter of the resulting oxidizing catalyst. When the loading amount is less than 0.1 gram with respect to 1 liter of the resulting oxidizing catalyst, oxidizing activity is little given to the resultant oxidizing catalyst, and accordingly HC, CO and SOF are emitted as they are. When the loading amount is more than 20 grams with respect to 1 liter of the resulting oxidizing catalyst, not only the catalytic action of the resultant oxidizing catalyst is saturated, but also the manufacturing cost thereof is increased.

In the present exhaust gas purifying apparatus, the sulfate-storing-and-reducing catalyst includes a porous catalyst support, and a sulfate-storing-and-reducing ingredient. The thus arranged sulfate-storing-and-reducing catalyst stores the precursors of sulfates ($SO_3$, $SO_4^{2-}$, $H_2SO_4$, etc.) which are produced by the oxidizing action of the oxidizing catalyst, as sulfates on the sulfate-storing-and-reducing ingredient. The stored sulfates are then decomposed to $SO_2$ at relatively low temperatures, and are emitted to recover the sulfate-storing-and-reducing ingredient. Consequently, the present exhaust gas purifying apparatus can effectively inhibit $SO_3$, $SO_4^{2-}$, $H_2SO_4$, etc., from being emitted to the outside, and can simultaneously keep the sulfate-storing-and-reducing activity for a long period of time.

As for the sulfate-storing-and-reducing ingredient, it is possible to employ at least one member selected from the group consisting of alkali metal elements, alkaline-earth metal elements, and transition elements. Among the transition elements, it is preferred to select at least one member from the group consisting of molybdenum (Mo) and tungsten (W), because these elements react with the precursors of sulfates (i.e., $SO_3$, $SO_4^{2-}$, $H_2SO_4$, etc.) to produce the sulfates which can be decomposed in a low temperature range, for instance, 500 °C or less. Thus, these transition elements can be especiallly effective for processing an exhaust gas of low temperatures emitted from a diesel engine. It is further preferred that the resulting sulfates be decomposed in a low temperature range of from 300 to 500 °C. When the exhaust gas is heated to above 500 °C, the sulfate-storing-and-reducing ingredient can not only be the aforementioned transition elements but also barium (Ba) or cobalt (Co) whose sulfates are less likely to decompose at 500 °C or less. Note that the suffate-storing-and-reducing ingredient can preferably be loaded on a porous catalyst support which is formed of alumina ($Al_2O_3$), titania ($TiO_2$), a mixture of alumina and silica ($SiO_2$), a mixture of alumina and

The alumina and titania are especially preferred as the porous support of the sulfate-storing-and-reducing catalyst, because they have acidic cites so that the sulfates are likely to be decomposed. Whilst, the silica is not so preferable as the alumina and titania, because it is so acidic that it is less likely to adsorb $SO_3$, $SO_4^{2-}$, $H_2SO_4$, etc., thereon. However, when the silica is mixed with the alumina and titania, it can be used also as the porous support of the sulfate-storing-and-reducing catalyst.

In the sulfate-storing-and-reducing catalyst, the sulfate-storing-and-reducing ingredient can preferably be loaded on the porous catalyst support in an amount of from 0.05 to 2 moles, further preferably from 0.1 to 0.5 moles, with respect to 1 liter of the resulting sulfate-storing-and-reducing catalyst. When the loading amount is less than 0.05 moles with respect to 1 liter of the resulting sulfate-storing-and-reducing catalyst, the sulfates, derived from $SO_3$, $SO_4^{2-}$, $H_2SO_4$, etc., are reduced in a lesser amount. Accordingly, the adsorption of the sultates is readily saturated, and subsequently the emission of $SO_3$, $SO_4^{2-}$, $H_2SO_4$, etc., is increased. When the loading amount is more than 2 moles with respect to 1 liter of the resulting sulfate-storing-and-reducing catalyst, the reducing activity of the resultant sulfate-storing-and-reducing catalyst is saturated so that the sulfate-storing-and-reducing ingredient is loaded uselessly.

The actions of the thus arranged sulfate-storing-and-reducing catalyst will be hereinafter described in detail. For example, when the sulfate-storing-and-reducing catalyst includes a catalyst support formed of alumina, and iron oxides loaded on the catalyst support, the precursors of sulfates (i.e., $SO_3$, $SO_4^{2-}$, $H_2SO_4$, etc.) are believed to be adsorbed onto the alumina, and to be reacted with the iron oxides to turn into iron sulfates. Then, the resulting iron sulfates are decomposed to $SO_2$ in a low temperature range, for instance, 500 °C or less, and are thereafter emitted as $SO_2$ to the outside. As a result, the present exhaust gas purifying apparatus can inhibit $SO_3$, $SO_4^{2-}$, $H_2SO_4$, etc., from being emitted to the outside.

After the oxidizing catalyst and the sulfate-storing-and-reducing catalyst are prepared as described above, they can be arranged positionally so that they are disposed in the following manner: the oxidizing catalyst is disposed on an upstream side in an exhaust system of a diesel engine, for example, adjacent to a diesel engine as close as possible (or immediately below an exhaust manifold of a diesel engine); and the sulfate-storing-and-reducing catalyst is disposed on a downstream side with respect to the oxidizing catalyst in the exhaust system. In this instance, the interval between the oxidizing catalyst and the sulfate-storing-and-reducing catalyst is not specified in particular. For instance, the oxidizing catalyst and the sulfate-storing-and-reducing catalyst can be disposed adjacent to each other, they can be contacted with each other, or they can be disposed away from each other with a predetermined interval provided therebetween. Note that, however, the temperature of the exhaust gas is decreased as it is measured on a further downstream side in the exhaust system. Hence, the sulfate-storing-and-reducing catalyst can preferably be positioned within a downstream area where the temperature of the exhaust gas is held in such a range that the sulfate-storing-and-reducing catalyst can effect its catalytic action most efficiently.

Alternatively, the present exhaust gas purifying apparatus can be constructed as an integral unit: namely; an oxidizing catalyst can be formed on a unitary honeycomb-shaped support substrate on an upstream side thereof in the direction of an exhaust gas flow; and a sulfate-storing-and-reducing catalyst can be formed on the unitary honeycomb-shaped support substrate on a downstream side with respect to the oxidizing catalyst.

The present catalytic apparatus will be hereinafter described in detail with reference to preferred embodiments and comparative examples.

First Reference Example (outside the scope of the invention)

(Preparation Sulfate-Storing-and-Reducing Catalyst)

A predetermined amount of an alumina powder was added into a prescribed amount of an aqueous solution of iron nitrate having a specific concentration. The resulting mixture was stirred at room temperature for 1 hour. Thereafter, the mixture was dried at 100 °C for 5 hours, and was subsequently calcinated at 650 °C for 1 hour to prepare an alumina-iron powder (i.e., an alumina powder with iron oxides loaded).

The thus prepared alumina-iron powder was added to distilled water along with an alumina sol, thereby preparing a slurry. Note that the alumina sol contained alumina in an amount of 5% by weight. Then, a honeycomb-shaped support substrate was immersed into the resulting slurry. The honeycomb-shaped support substrate had a volume of 1.7 L, and was formed of cordierite. Thereafter, the honeycomb-shaped support substrate was taken out of the slurry, and was blown off to remove excessive slurry. Finally, the honeycomb-shaped support substrate was dried at 120 °C for 10 hours, and was subsequently calcinated at 700 °C for 2 hours. Thus, a coating layer was formed on the honeycomb-shaped support substrate, thereby completing a sulfate-storing-and-reducing catalyst.

The thus prepared sulfate-storing-and-reducing catalyst included an alumina coating layer, and iron oxides loaded on the alumina coating layer. The alumina coating layer was formed in an amount of 120 grams with respect to 1 L of the honeycomb-shaped support substrate. The iron oxides were loaded on the alumina coating layer in an amount of 0.3 moles with respect to 1 L of the honeycomb-shaped support substrate. Note that the loading amount of the iron oxides was converted into an amount of metallic iron.

(Preparation of Oxidizing Catalyst)

Another alumina powder was added to distilled water along with another alumina sol, thereby preparing another slurry. Note that the alumina sol contained alumina in an amount of 5% by weight. Then, another honeycomb-shaped support substrate was immersed into the resulting slurry. Likewise, the honeycomb-shaped support substrate had a volume of 1.7 L, and was formed of cordierite. Thereafter, the honeycomb-shaped support substrate was taken out of the slurry, and was blown off to remove excessive slurry. Then, the honeycomb-shaped support substrate was dried at 120 °C for 10 hours, and was subsequently calcinated at 500 °C for 2 hours. Thus, a coating layer was formed on the honeycomb-shaped support substrate.

Whilst, an aqueous solution of dinitrodiammine platinum nitrate was prepared to have a predetermined concentration. The honeycomb-shaped support substrate with the aforementioned alumina coating layer formed thereon was immersed into the aqueous solution. Thereafter, the honeycomb-shaped support substrate was taken out of the aqueous solution, and was blown off to remove excessive water droplets. Then, the honeycomb-shaped support substrate was dried at 120 °C for 10 hours, and was subsequently calcinated at 250 °C for 1 hour. Thus, an oxidizing catalyst was completed.

The thus prepared oxidizing catalyst included an alumina coating layer, and metallic platinum loaded on the alumina coating layer. The alumina coating layer was formed in an amount of 120 grams with respect to 1 L of the honeycomb-shaped support substrate. The metallic platinum was loaded on the alumina coating layer in an amount of 1 gram with respect to 1 L of the honeycomb-shaped support substrate.

(Arrangement of Exhaust Gas Purifying Apparatus)

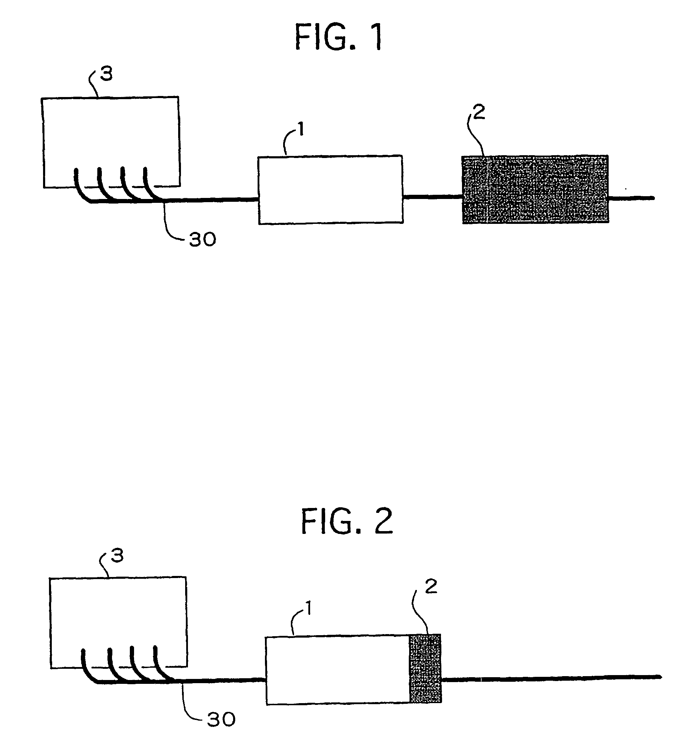

Then, as illustrated in Fig. 1, the resultant oxidizing catalyst was disposed on an upstream side in an exhaust system 30 of a diesel engine 3, and the resultant sulfate-storing-and-reducing catalyst was disposed on a downstream side with respect to the oxidizing catalyst in the exhaust system 30. In the drawing, the oxidizing catalyst is designated at 1, and the sulfate-storing-and-reducing catalyst is designated at 2. The diesel engine 3 had a displacement of 2.4 L.

(Examination and Evaluation)

The diesel engine 3 was operated in a temperature range of from 200 to 500 °C under the ordinary rated conditions. Note that the operating temperature was increased by 50 °C for every 1 minute. The exhaust gas was examined for an $SO_2$ concentration $(C_1)$ at the outlet of the oxidizing catalyst, and was further examined for an $SO_2$ concentration $(C_2)$ at the outlet of the sulfate-storing-and-reducing catalyst. A sulfate reducing rate was calculated by the following equation:

$$\text{Sulfate Reducing Rate (\%)} = \{(C_2 - C_1)/C_1\} \times 100.$$

The result of the examination is summarized in Table 1 below.

Second Reference Exampe (outside the scope of the invention)

Instead of the aqueous solution of iron nitrate, an aqueous solution of copper nitrate having a specific concentration was used to prepare a sulfate-storing-and-reducing catalyst of a Second Reference Example. Unless otherwise specified, the sulfate-storing-and-reducing catalyst of the Second Reference Example was completed in the same manner as that of the First Reference Example. The resultant sulfate-storing-and-reducing catalyst included an alumina coating layer, and copper oxides loaded on the alumina coating layer. The alumina coating layer was formed in an amount of 120 grams with respect to 1 L of the honeycomb-shaped support substrate. The copper oxides were loaded on the alumina coating layer in an amount of 0.3 moles with respect to 1 L of the honeycomb-shaped support substrate. Note that the loading amount of the copper oxides was converted into an amount of metallic copper.

Whilst, an oxidizing catalyst of the Second Reference Example was prepared in the identical manner with that of the First Reference Example. Then, the oxidizing catalyst as well as the sulfate-storing-and-reducing catalyst were disposed to construct an exhaust gas purifying apparatus in the same fashion as that of the First Reference Example. The resultant exhaust gas purifying apparatus was examined for the sulfate reducing rate under the aforementioned conditions. The result of the examination is also summarized in Table 1 below.

First Preferred Embodiment

Instead of the aqueous solution of iron nitrate, an aqueous solution of ammonium molybdate having a specific concentration was used to prepare a sulfate-storing-and-reducing catalyst of a First Preferred Embodiment. Unless otherwise specified, the sulfate-storing-and-reducing catalyst of the First Preferred Embodiment was completed in the same manner as that of the First Reference Example. The resultant sulfate-storing-and-reducing catalyst included an alumina coating layer, and molybdenum oxides loaded on the alumina coating layer. The alumina coating layer was formed in an amount of 120 grams with respect to 1 L of the honeycomb-shaped support substrate. The molybdenum oxides were loaded on the alumina coating layer in an amount of 0.3 moles with respect to 1 L of the honeycomb-shaped support substrate. Note that the loading amount of the molybdenum oxides was converted into an amount of metallic molybdenum.

Whilst, an oxidizing catalyst of the First Preferred Embodiment was prepared in the identical manner with that of the First Reference Example. Then, the oxidizing catalyst as well as the sulfate-storing-and-reducing catalyst were disposed to construct an exhaust gas purifying apparatus in the same fashion as that of the First Reference Example. The resultant exhaust gas purifying apparatus was examined for the sulfate reducing rate under the aforementioned conditions. The result of the examination is also summarized in Table 1 below.

Second Preferred Embodiment

Instead of the aqueous solution of iron nitrate, an aqueous solution of ammonium tungstate having a specific concentration was used to prepare a sulfate-storing-and-reducing catalyst of a Second Preferred Embodiment. Unless otherwise specified, the sulfate-storing-and-reducing catalyst of the Second Preferred Embodiment was completed in the same manner as that of the First Reference Example. The resultant sulfate-storing-and-reducing catalyst included an alumina coating layer, and tungsten oxides loaded on the alumina coating layer. The alumina coating layer was formed in an amount of 120 grams with respect to 1 L of the honeycomb-shaped support substrate. The tungsten oxides were loaded on the alumina coating layer in an amount of 0.3 moles with respect to 1 L of the honeycomb-shaped support substrate. Note that the loading amount of the tungsten oxides was converted into an amount of metallic tungsten.

Whilst, an oxidizing catalyst of the Second Preferred Embodiment was prepared in the identical manner with that of the First Reference Example. Then, the oxidizing catalyst as well as the sulfate-storing-and-reducing catalyst were disposed to construct an exhaust gas purifying apparatus in the same fashion as that of the First Reference Example. The resultant exhaust gas purifying apparatus was examined for the sulfate reducing rate under the aforementioned conditions. The result of the examination is also summarized in Table 1 below.

Third Reference Example

Instead of the alumina powder, a titania powder was used for the preparation of a sulfate-storing-and-reducing catalyst of a Third Reference Example. Instead of the alumina sol, a titania sol was used therefor. Unless otherwise specified, the sulfate-storing-and-reducing catalyst of the Third Reference Example was completed in the same manner as that of the First Reference Example. The resultant sulfate-storing-and-reducing catalyst included a titania coating layer, and iron oxides loaded on the titania coating layer. The titania coating layer was formed in an amount of 120 grams with respect to 1 L of the honeycomb-shaped support substrate. The iron oxides were loaded on the titania coating layer in an amount of 0.3 moles with respect to 1 L of the honeycomb-shaped support substrate. Note that the loading amount of the iron oxides was converted into an amount of metallic iron.

Whilst, an oxidizing catalyst of the Third Reference Example was prepared in the identical manner with that of the First Reference Example. Then, the oxidizing catalyst as well as the sulfate-storing-and-reducing catalyst were disposed to construct an exhaust gas purifying apparatus in the same fashion as that of the First Reference Example. The resultant exhaust gas purifying apparatus was examined for the sulfate reducing rate under the aforementioned conditions. The result of the examination is also summarized in Table 1 below.

Fourth Reference Example

Instead of the alumina powder, a titania powder was used for the preparation of a sulfate-storing-and reducing catalyst of a Fourth Reference Example. Instead of the alumina sol, a titania sol was used therefor. Instead of the aqueous solution of iron nitrate, an aqueous solution of copper nitrate having a specific concentration was used therefor. Unless otherwise specified, the suffate-storing-and-reducing catalyst of the Fourth Reference Example was completed in the same manner as that of the First Reference Example. The resultant sulfate-storing-and-reducing catalyst included a titania coating layer, and copper oxides loaded on the titania coating layer. The titania coating layer was formed in an amount of 120 grams with respect to 1 L of the honeycomb-shaped support substrate. The copper oxides were loaded on the titania coating layer in an amount of 0.3 moles with respect to 1 L of the honeycomb-shaped support substrate. Note that the loading amount of the copper oxides was converted into an amount of metallic copper.

Whilst, an oxidizing catalyst of the Fourth Reference Example was prepared in the identical manner with that of the First Reference Example. Then, the oxidizing catalyst as well as the sulfate-storing-and-reducing catalyst were disposed to construct an exhaust gas purifying apparatus in the same fashion as that of the First Reference Example. The resultant exhaust gas purifying apparatus was examined for the sulfate reducing rate under the aforementioned conditions. The result of the examination is also summarized in Table 1 below.

Third Preferred Embodiment

Instead of the alumina powder, a titania powder was used for the preparation of a sulfate-storing-and-reducing catalyst of a Third Preferred Embodiment. Instead of the alumina sol, a titania sol was used therefor. Instead of the aqueous solution of iron nitrate, an aqueous solution of ammonium molybdate having a specific concentration was used therefor. Unless otherwise specified, the sulfate-storing-and-reducing catalyst of the Third Preferred Embodiment was completed in the same manner as that of the First Reference Example. The resultant sulfate-storing-and-reducing catalyst included a titania coating layer, and molybdenum oxides loaded on the titania coating layer. The titania coating layer was formed in an amount of 120 grams with respect to 1 L of the honeycomb-shaped support substrate. The molybdenum oxides were loaded on the titania coating layer in an amount of 0.3 moles with respect to 1 L of the honeycomb-shaped support substrate. Note that the loading amount of the molybdenum oxides was converted into an amount of metallic molybdenum.

Whilst, an oxidizing catalyst of the Third Preferred Embodiment was prepared in the identical manner with that of the First Reference Example. Then, the oxidizing catalyst as well as the sulfate-storing-and-reducing catalyst were disposed to construct an exhaust gas purifying apparatus in the same fashion as that of the First Reference Example. The resultant exhaust gas purifying apparatus was examined for the sulfate reducing rate under the aforementioned conditions. The result of the examination is also summarized in Table 1 below.

Fourth Preferred Embodiment

Instead of the alumina powder, a titania powder was used for the preparation of a sulfate-storing-and-reducing catalyst of an Fourth Preferred Embodiment. Instead of the alumina sol, a titania sol was used therefor. Instead of the aqueous solution of iron nitrate, an aqueous solution of ammonium tungstate having a specific concentration was used therefor. Unless otherwise specified, the sulfate-storing-and-reducing catalyst of the Fourth Preferred Embodiment was completed in the same manner as that of the First Reference Example. The resultant sulfate-storing-and-reducing catalyst included a titania coating layer, and tungsten oxides loaded on the titania coating layer. The titania coating layer was formed in an amount of 120 grams with respect to 1 L of the honeycomb-shaped support substrate. The tungsten oxides were loaded on the titania coating layer in an amount of 0.3 moles with respect to 1 L of the honeycomb-shaped support substrate. Note that the loading amount of the tungsten oxides was converted into an amount of metallic tungsten.

Whilst, an oxidizing catalyst of the Fourth Preferred Embodiment was prepared in the identical manner with that of the First Reference Example. Then, the oxidizing catalyst as well as the sulfate-storing-and-reducing catalyst were disposed to construct an exhaust gas purifying apparatus in the same fashion as that of the First Reference Example. The resultant exhaust gas purifying apparatus was examined for the sulfate reducing rate under the aforementioned conditions. The result of the examination is also summarized in Table 1 below.

Comparative Example Nos. 1 through 4

Instead of the alumina powder, a silica powder was used for the preparation of a sulfate-storing-and-reducing catalyst of Comparative Example Nos. 1 through 4. Instead of the alumina sol, a silica sol was used therefor. Unless otherwise specified, the sulfate-storing-and-reducing catalyst of Comparative Example Nos. 1 through 4 was completed in the same manner as those of the First through Fourth Preferred Embodiments, respectively.

Whilst, an oxidizing catalyst of Comparative Example Nos. 1 through 4 was prepared in the identical manner with that of the First Preferred Embodiment. Then, the oxidizing catalyst as well as the sulfate-storing-and-reducing catalyst were disposed to construct an exhaust gas purifying apparatus in the same fashion as that of the First Preferred Embodiment. The resultant exhaust gas purifying apparatuses were examined for the sulfate reducing rate under the aforementioned conditions. The results of the examinations are also summarized in Table 1 below.

Comparative Example Nos. 5 through 8

Instead of the alumina powder, a zirconia powder was used for the preparation of a sulfate-storing-and-reducing catalyst of Comparative Example Nos. 5 through 8. Instead of the alumina sol, a zirconia sol was used therefor. Unless otherwise specified, the sulfate-storing-and-reducing catalyst of Comparative Example Nos. 5 through 8 was completed in the same manner as those of the Fifth through Eighth Preferred Embodiments, respectively.

Whilst, an oxidizing catalyst of Comparative Example Nos. 5 through 8 was prepared in the identical manner with that of the First Preferred Embodiment. Then, the oxidizing catalyst as well as the sulfate-storing-and-reducing catalyst was disposed to construct an exhaust gas purifying apparatus in the same fashion as that of the First Preferred Embodiment. The resultant exhaust gas purifying apparatuses were examined for the sulfate reducing rate under the aforementioned conditions. The results of the examinations are also summarized in Table 1 below.

Fifth Preferred Embodiment

Instead of the aqueous solution of iron nitrate, an aqueous solution of cobalt nitrate having a specific concentration was used to prepare a sulfate-storing-and-reducing catalyst of Fifth Preferred Embodiment. Unless otherwise specified, the sulfate-storing-and-reducing catalyst of Fifth Preferred Embodiment was completed in the same manner as that of the First Reference Example. The resultant sulfate-storing-and-reducing catalyst included an alumina coating layer, and cobalt oxides loaded on the alumina coating layer. The alumina coating layer was formed in an amount of 120 grams with respect to 1 L of the honeycomb-shaped support substrate. The cobalt oxides were loaded on the alumina coating layer in an amount of 0.3 moles with respect to 1 L of the honeycomb-shaped support substrate. Note that the loading amount of the cobalt oxides was converted into an amount of metallic cobalt.
Whilst, an oxidizing catalyst of Fifth Preferred Embodiment was prepared in the identical manner with that of the First Reference Example. Then, the oxidizing catalyst as well as the sulfate-storing-and-reducing catalyst were disposed to construct an exhaust gas purifying apparatus in the same fashion as that of the First Reference Example. The resultant exhaust gas purifying apparatus was examined for the sulfate reducing rate under the aforementioned conditions. The result of the examination is also summarized in Table 2 below.

Sixth Preferred Embodiment

Instead of the aqueous solution of iron nitrate, an aqueous solution of barium acetate having a specific concentration was used to prepare a sulfate-storing-and-reducing catalyst of Sixth Preferred Embodiment. Unless otherwise specified, the sulfate-storing-and-reducing catalyst of Sixth Preferred Embodiment was completed in the same manner as that of the First Reference Example. The resultant sulfate-storing-and-reducing catalyst included an alumina coating layer, and barium oxides loaded on the alumina coating layer. The alumina coating layer was formed in an amount of 120 grams with respect to 1 L of the honeycomb-shaped support substrate. The barium oxides were loaded on the alumina coating layer in an amount of 0.3 moles with respect to 1 L of the honeycomb-shaped support substrate. Note that the loading amount of the barium oxides was converted into an amount of metallic barium.
Whilst, an oxidizing catalyst of Sixth Preferred Embodiment was prepared in the identical manner with that of the First Reference Example. Then, the oxidizing catalyst as well as the sulfate-storing-and-reducing catalyst were disposed to construct an exhaust gas purifying apparatus in the same fashion as that of the First Reference Example. The resultant exhaust gas purifying apparatus was examined for the sulfate reducing rate under the aforementioned conditions. The result of the examination is also summarized in Table 2 below.

Fifth Reference Example

Instead of the aqueous solution of iron nitrate, an aqueous solution of sodium nitrate having a specific concentration was used to prepare a sulfate-storing-and-reducing catalyst of Fifth Reference Example. Unless otherwise specified, the sulfate-storing-and-reducing catalyst of Fifth Reference Example was completed in the same manner as that of the First Reference Example. The resultant sulfate-storing-and-reducing catalyst included an alumina coating layer, and sodium oxides loaded on the alumina coating layer. The alumina coating layer was formed in an amount of 120 grams with respect to 1 L of the honeycomb-shaped support substrate. The sodium oxides were loaded on the alumina coating layer in an amount of 0.3 moles with respect to 1 L of the honeycomb-shaped support substrate. Note that the loading amount of the sodium oxides was converted into an amount of metallic sodium.
Whilst, an oxidizing catalyst of Fifth Reference Example was prepared in the identical manner with that of the First Reference Example. Then, the oxidizing catalyst as well as the sulfate-storing-and-reducing catalyst were disposed to construct an exhaust gas purifying apparatus in the same fashion as that of the First Reference Example. The resultant exhaust gas purifying apparatus was examined for the sulfate reducing rate under the aforementioned conditions. The result of the examination is also summarized in Table 2 below.

TABLE 1

| Identification | Sulfate-Storing-and-Reducing Catalyst | | |
|---|---|---|---|
| | Loaded Catalyst Ingredient (Loading Amount) | Coating Layer | Sulfate Reducing Rate (%) |
| 1st Reference Example | Fe (0.3 mole/L) | $Al_2O_3$ | 5 |

TABLE 1   (continued)

| Identification | Sulfate-Storing-and-Reducing Catalyst | | |
| | Loaded Catalyst Ingredient (Loading Amount) | Coating Layer | Sulfate Reducing Rate (%) |
|---|---|---|---|
| 2nd Reference Example | Cu (0.3 mole/L) | $Al_2O_3$ | 10 |
| 1st Pref. Embodiment | Mo (0.3 mole/L) | $Al_2O_3$ | 15 |
| 2nd Pref. Embodiment | W (0.3 mole/L) | $Al_2O_3$ | 10 |
| 3rd Reference Example | Fe (0.3 mole/L) | $TiO_2$ | 40 |
| 4th Reference Example | Cu (0.3 mole/L) | $TiO_2$ | 20 |
| 3rd Pref. Embodiment | Mo (0.3 mole/L) | $TiO_2$ | 10 |
| 4th Pref. Embodiment | W (0.3 mole/L) | $TiO_2$ | 5 |
| Comparative Ex. No.1 | Fe (0.3 mole/L) | $SiO_2$ | 0 |
| Comparative Ex. No. 2 | Cu (0.3 mole/L) | $SiO_2$ | 0 |
| Comparative Ex. No. 3 | Mo (0.3 mole/L) | $SiO_2$ | 0 |
| Comparative Ex. No. 4 | W (0.3 mole/L) | $SiO_2$ | 0 |
| Comparative Ex. No. 5 | Fe (0.3 mole/L) | $ZrO_2$ | 0 |
| Comparative Ex. No. 6 | Cu (0.3 mole/L) | $ZrO_2$ | 0 |
| Comparative Ex. No. 7 | Mo (0.3 mole/L) | $ZrO_2$ | 0 |
| Comparative Ex. No. 8 | W (0.3 mole/L) | $ZrO_2$ | 0 |
| 5th Pref. Embodiment | Co (0.3 mole/L) | $Al_2O_3$ | 0 |
| 6th Pref. Embodiment | Ba (0.3 mole/L) | $Al_2O_3$ | 0 |
| 5th Reference Example | Na (0.3 mole/L) | $Al_2O_3$ | 0 |

It is apparent from Table 1 that the exhaust gas purifying apparatuses of the First through Fourth Preferred Embodiments as well as First through Fourth Reference Examples could efficiently reduce the sulfates. This advantages are believed to result from the action of the acidic cites of the alumina and titania: namely; the acidic cites of the coating layer facilitatively decomposed sulfates which were stored on the sulfate-storing-and-reducing catalysts.

On the other hand, the exhaust gas purifying apparatuses of Comparative Example Nos. 1 through 8 seem to have little adsorbed the precursors of sulfates (i.e., $SO_3$, $SO_4^{2-}$, $H_2SO_4$, etc.) and to have emitted them as they were, because the coating layers were formed of silica and zirconia which were acidic oxides.

Note that the exhaust gas purifying apparatuses of Fifth and sixth Preferred Embodiment, as well as fifth Reference Example did not reduce the sulfates despite the coating layers which were formed of alumina. This phenomenon results from the fact that the sulfates of Co, Ba and Na have a high decomposition temperature, and that they cannot be decomposed at about 500 °C which an exhaust gas, emitted from a diesel engine, can exhibit at the highest. Accordingly, by employing a heater for heating the sulfate-storing-and-reducing catalysts, or by employing a heater for heating the exhaust gas being introduced into the sulfate-storing-and-reducing catalysts, the exhaust gas purifying apparatuses of Fifth and Sixth Preferred Embodiments can be made to reduce the sulfates in the same way as the First through Fourth Preferred Embodiments.

In the First through Fourth Preferred Embodiments, the oxidizing catalysts and the sulfate-storing-and-reducing catalysts were disposed so as to construct a tandem exhaust gas apparatus. Namely, the oxidizing catalysts and the sulfate-storing-and-reducing catalysts were disposed in series with a predetermined interval provided therebetween. Whilst, as illustrated in Fig. 2, an oxidizing catalyst can be formed on a unitary catalyst support on an upstream side thereof in the direction of an exhaust gas flow, and a sulfate-storing-and-reducing catalyst can be formed on the unitary catalyst support on a downstream side with respect to the oxidizing catalyst. The thus modified exhaust gas purifying catalyst can apparently operate and produce advantages in the same manner as the First through Fourth Preferred Embodiments.

Having now fully described the present invention, it will be apparent to one of ordinary skill in the art that many changes and modifications can be made thereto without departing from the spirit or scope of the present invention as set forth herein including the appended claims.

An apparatus for purifying an exhaust gas emitted from a diesel engine includes an oxidizing catalyst, and a sulfate-storing-and-reducing catalyst. The oxidizing catalyst is disposed on an upstream side in an exhaust system of a diesel engine, and can oxidize at least HC (i.e., hydrocarbons) contained in an exhaust gas emitted from the diesel engine. The sulfate-storing-and-reducing catalyst can not only capture precursors of sulfates (i.e., $SO_3$, $SO_4^{2-}$, $H_2SO_4$, etc.), generated at the oxidizing catalyst, as sulfates, but also can reduce the captured sulfates to $SO_2$, and is disposed on a downstream side with respect to the oxidizing catalyst in the exhaust system. The sulfate-storing-and-reducing catalyst turns the precursors of sulfates into sulfates, stores them, and reduces them to $SO_2$. Thus, the apparatus little emits the precursors of sulfates to the outside, and can inhibit the particulates emission for a long period of time.

**Claims**

1.  An apparatus for purifying an exhaust gas emitted from a diesel engine (3), comprising:

    an oxidizing catalyst (1) disposed on an upstream side in an exhaust system (30) of a diesel engine (3), and being capable of oxidizing and purifying at least hydrocarbons included in an exhaust gas emitted from the diesel engine (3); and
    a sulfate-storing-and-reducing-catalyst (2) ,

    **characterized in that**

    said sulfate-storing-and-reducing-catalyst (2) is not only capable of capturing precursors of sulfates, generated at said oxidizing catalyst (1), as sulfates, but also capable of reducing the captured sulfates to sulfur dioxide, and is disposed on a downstream side with respect to said oxidizing catalyst(1) in the exhaust system (30),

    wherein said sulfate-storing-and-reducing-catalyst (2) includes a porous catalyst support formed of at least one member which is selected from the group consisting of alumina, titania, a mixture of alumina and titania, and at least one sulfate-storing-and-reducing ingredient which is selected from Mo and W.

2.  The apparatus according to claim 1, wherein said oxidizing catalyst (2) includes a porous catalyst support formed of at least one member which is selected from the group consisting of alumina, silica, a composite oxide of silica and alumina, zirconia, titania, and zeolite, and at least one catalyst ingredient which is selected from the group consisting of platinum, rhodium, palladium, ruthenium, and iridium, and which is loaded on the porous catalyst support.

3.  The apparatus according to claim 2, wherein said catalyst ingredient is loaded on said porous catalyst support in an amount of from 0.1 to 20 grams with respect to 1 liter of said oxidizing catalyst (1).

4.  The apparatus according to claims 1 to 3, wherein said sulfate-storing-and-reducing ingredient is loaded on said porous catalyst support in an amount of from 0.05 to 2 moles with respect to 1 liter of said sulfate-storing-and-reducing-catalyst (2).

5.  An apparatus for purifying an exhaust gas emitted from a diesel engine (3), comprising:

    an oxidizing catalyst (1) disposed on an upstream side in an exhaust system (30) of a diesel engine (3), and being capable of oxidizing and purifying at least hydrocarbons included in an exhaust gas emitted from the diesel engine (3); and
a sulfate-storing-and-reducing-catalyst (2),

**characterized in that**

it further comprises a heater for heating the exhaust gas or the sulfate-storing-and-reducing-catalyst
said sulfate-storing-and-reducing-catalyst (2) is not only capable of capturing precursors of sulfates, generated at said oxidizing catalyst (1), as sulfates, but also capable of reducing the captured sulfates to sulfur dioxide, and is disposed on a downstream side with respect to said oxidizing catalyst (1) in the exhaust system (30),

wherein said sulfate-storing-and-reducing-catalyst (2) includes a porous catalyst support formed of at least one member which is selected from the group consisting of alumina, titania, a mixture of alumina and silica, a mixture of alumina and titania, and at least one sulfate-storing-and-reducing ingredient which is selected from the group consisting of Ba and Co.

6. The apparatus according to claim 5, wherein said oxidizing catalyst (2) includes a porous catalyst support formed of at least one member which is selected from the group consisting of alumina, silica, a composite oxide of silica and alumina, zirconia, titania, and zeolite, and at least one catalyst ingredient which is selected from the group consisting of platinum, rhodium, palladium, ruthenium, and iridium, and which is loaded on the porous catalyst support.

7. The apparatus according to one of claims 5 and 6, wherein said catalyst ingredient is loaded on said porous catalyst support in an amount of from 0.1 to 20 grams with respect to 1 liter of said oxidizing catalyst (1).

8. The apparatus according to one of claims 5 to 7, wherein said sulfate-storing-and-reducing-ingredient is loaded on said porous catalyst support in an amount of from 0.05 to 2 moles with respect to 1 liter of said sulfate-storing-and-reducing-catalyst (2).

9. The apparatus according to one of claims 1 to 8, wherein said oxidizing catalyst (1) is formed on a unitary support substrate on an upstream side thereof in the direction of an exhaust gas flow; and said sulfate-storing-and-reducing catalyst (2) is formed on the unitary support substrate on a downstream side thereof with respect to said oxidizing catalyst (1).

10. Use of the apparatus according to one of claims 5 to 9 for purifying an exhaust gas emitted from a diesel engine, wherein:

said sulfates are reduced to sulfur dioxide at a temperature above 500°C by using said heater.

11. Use of the apparatus according to one of claims 1 to 4 for purifying an exhaust gas emitted from a diesel engine

**Patentansprüche**

1. Gerät zum Reinigen eines Abgases, das aus einem Dieselmotor (3) ausgestoßen wird, das umfasst:

einen oxidierenden Katalysator (1), der stromaufwärts in einem Abgassystem (30) eines Dieselmotors (3) angeordnet ist, und der wenigstens Kohlenwasserstoffe oxidieren und reinigen kann, die in einem Abgas eingeschlossen sind, das von dem Dieselmotor (3) ausgestoßen wird; und
einen sulfatspeichernden und reduzierenden Katalysator (2),

**dadurch gekennzeichnet, dass**

der sulfatspeichernde und reduzierende Katalysator (2) nicht nur Vorstufen von Sulfaten einfangen kann, die bei dem oxidierenden Katalysator (1) als Sulfate erzeugt werden, sondern auch eingefangene Sulfate zu Schwefeldioxid reduzieren kann, und stromabwärts im Hinblick auf den oxidierenden Katalysator (1) in dem Abgassystem (30) angeordnet ist,

wobei der sulfatspeichernde und reduzierende Katalysator (2) beinhaltet: einen porösen Katalysatorträger, der aus wenigstens einem Element gebildet ist, welches aus der Gruppe ausgewählt ist, die aus Aluminiumoxid, Titandioxid, einer Mischung aus Aluminiumoxid und Titandioxid besteht, und wenigstens einen sulfatspeichernden und reduzierenden Inhaltsstoff, welcher aus Mo und W ausgewählt ist.

2. Gerät gemäß Anspruch 1, wobei der oxidierende Katalysator (2) beinhaltet:

einen porösen Katalysatorträger, der aus wenigstens einem Element gebildet ist, welches aus der Gruppe ausgewählt ist, die aus Aluminiumoxid, Silizumdioxid, einem Kompositoxid aus Siliciumdioxid und Aluminiumoxid, Zirkondioxid, Titandioxid, und Zeolith besteht, und
wenigstens ein Katalysatorinhaltsstoff, welcher aus der Gruppe ausgewählt ist, die aus Platin, Rhodium, Palladium, Ruthenium und Iridium besteht, und welcher auf den porösen Katalysatorträger geträgert ist.

3. Gerät gemäß Anspruch 2, wobei der Katalysatorinhaltsstoff auf dem porösen Katalysatorträger in einer Menge von 0,1 bis 20 Gramm in Hinblick auf 1 Liter des oxidierenden Katalysators (1) geträgert ist.

4. Gerät gemäß einem der Ansprüche 1 bis 3, wobei der sulfatspeichernde und reduzierende Inhaltsstoff auf dem porösen Katalysatorträger in einer Menge von 0,05 bis 2 Mol im Hinblick auf 1 Liter des sulfatspeichernden und reduzierenden Katalysators (2) geträgert ist.

5. Gerät zum Reinigen eines Abgases, das aus einem Dieselmotor (3) ausgestoßen wird, das umfasst:

einen oxidierenden Katalysator (1), der stromaufwärts in einem Abgassystem (30) eines Dieselmotors (3) angeordnet ist, und der wenigstens Kohlenwasserstoffe, die in einem Abgas, das aus dem Dieselmotor (3) ausgestoßen wird, oxidieren und reinigen kann; und
ein sulfatspeichernder und reduzierender Katalysator (2),

**dadurch gekennzeichnet, dass**
dieser ferner eine Heizvorrichtung zum Erhitzen des Abgases oder des sulfatspeichernden und reduzierenden Katalysators umfasst,

der sulfatspeichernde und reduzierende Katalysator (2) nicht nur Vorstufen von Sulfaten einfangen kann, die bei dem oxidierenden Katalysator (1) als Sulfate erzeugt werden, sondern auch die eingefangenen Sulfate zu Schwefeldioxid reduzieren kann, und stromabwärts im Hinblick auf den oxidierenden Katalysator (1) in dem Abgassystem (30) angeordnet ist,

wobei der sulfatspeichernde und reduzierende Katalysator (2) beinhaltet: einen porösen Katalysatorträger, der aus wenigstens einem Element gebildet ist, welches aus der Gruppe ausgewählt ist, die aus Aluminiumoxid, Titandioxid, einer Mischung aus Aluminiumoxid und Siliziumdioxid, einer Mischung aus Aluminiumoxid und Titandioxid besteht, und wenigstens einen sulfatspeichernden und reduzierenden Inhaltsstoff, welcher aus der Gruppe ausgewählt ist, die aus Ba und Co besteht.

6. Gerät gemäß Anspruch 5, wobei der oxidierende Katalysator (2) beinhaltet:

einen porösen Katalysatorträger, der aus wenigstens einem Element gebildet ist, welches aus der Gruppe ausgewählt ist, die aus Aluminiumoxid, Siliziumdioxid, einem Kompositoxid aus Siliziumdioxid und Aluminiumoxid, Zirkondioxid, Titandioxid, und Zeolith besteht, und
wenigstens einen Katalysatorinhaltsstoff, welcher aus der Gruppe ausgewählt ist, die aus Platin, Rhodium, Palladium, Ruthenium und Iridium, und welches auf dem porösen Katalysatorträger geträgert ist.

7. Gerät gemäß einem der Ansprüche 5 und 6, wobei der Katalysatorinhaltsstoff auf dem porösen Katalysatorträger in einer Menge von 0,1 bis 20 Gramm im Hinblick auf 1 Liter des oxidierenden Katalysators (1) geträgert ist.

8. Gerät gemäß einem der Ansprüche 5 bis 7, wobei der sulfatspeichernde und reduzierende Inhaltsstoff auf dem porösen Katalysatorträger in einer Menge von 0,05 bis 2 Mol in Hinblick auf 1 Liter des sulfatspeichernden und reduzierenden Katalysators (2) geträgert ist.

9. Gerät gemäß einem der Ansprüche 1 bis 8, wobei der oxidierende Katalysator (1) auf einem einheitlichen Trägersubstrat auf der stromaufwärtigen Seite davon in Richtung eines Abgasstromes gebildet ist; und der sulfatspeichernde und reduzierende Katalysator (2) auf dem einzigen Trägersubstrat auf der stromabwärtigen Seite davon im Hinblick auf den oxidierenden Katalysator (1) gebildet ist.

10. Verwendung des Geräts gemäß einem der Ansprüche 5 bis 9 zum Reinigen eines Abgases, der aus einem Dieselmotor ausgestoßen wird, wobei:

   die Sulfate zu Schwefeldioxid bei einer Temperatur oberhalb 500°C unter Verwendung der Heizvorrichtung reduziert werden.

11. Verwendung des Geräts gemäß einem der Ansprüche 1 bis 4 zum Reinigen eines Abgases, das aus einem Dieselmotor ausgestoßen wird.


## Revendications

1. Appareil de purification des gaz d'échappement émis depuis un moteur diesel (3), comprenant :

   un catalyseur d'oxydation (1) disposé sur un côté en amont dans un système d'échappement (30) d'un moteur diesel (3), et étant capable d'oxyder et de purifier au moins les hydrocarbures compris dans les gaz d'échappement émis depuis le moteur diesel (3); et
   un catalyseur de stockage et de réduction de sulfates (2),

   **caractérisé en ce que**
   ledit catalyseur de stockage et de réduction de sulfates (2) est non seulement capable de capturer les précurseurs de sulfates générés au niveau dudit catalyseur d'oxydation (1), en tant que sulfates, mais également capable de réduire les sulfates capturés en dioxydes de soufre et est disposé sur un côté en aval par rapport audit catalyseur d'oxydation (1) dans le système d'échappement (30),
   dans lequel ledit catalyseur de stockage et de réduction de sulfates (2) comprend un support de catalyseur poreux formé d'au moins un élément qui est sélectionné à partir du groupe composé de l'alumine, du titane, d'un mélange d'alumine et de titane, et d'au moins un ingrédient de stockage et de réduction de sulfate qui est sélectionné parmi le Mo et le W.

2. Appareil selon la revendication 1, dans lequel ledit catalyseur d'oxydation (2) comprend un support de catalyseur poreux formé d'au moins un élément qui est sélectionné à partir du groupe composé de l'alumine, de la silice, d'oxydes composites de silice et d'alumine, de zircone, de titane et de zéolite, et au moins un ingrédient de catalyseur qui est sélectionné à partir du groupe composé du platine, du rhodium, du palladium, du ruthénium, et de l'iridium, et qui est chargé sur le support de catalyseur poreux.

3. Appareil selon la revendication 2, dans lequel ledit ingrédient de catalyseur est chargé sur ledit support de catalyseur poreux en une quantité allant de 0,1 à 20 g par rapport à 1 L dudit catalyseur d'oxydation (1).

4. Appareil selon la revendication 1 à 3, dans lequel ledit ingrédient de stockage et de réduction de sulfates est chargé sur ledit support de catalyseur poreux en une quantité allant de 0,05 à 2 moles par rapport à 1 L dudit catalyseur de stockage et de réduction de sulfates (2).

5. Appareil de purification des gaz d'échappement émis d'un moteur diesel (3), comprenant :

   un catalyseur d'oxydation (1) disposé sur un côté en amont dans un système d'échappement (30) d'un moteur diesel (3), et étant capable d'oxyder et de purifier au moins les hydrocarbures compris dans les gaz d'échappement émis depuis le moteur diesel (3) ; et
   un catalyseur de stockage et de réduction de sulfates (2),

   **caractérisé en ce qu'**il comprend de plus un chauffage destiné à chauffer les gaz d'échappement ou le catalyseur de stockage et de réduction de sulfates,
   ledit catalyseur de stockage et de réduction de sulfates (2) n'est pas seulement capable de capturer les précurseurs de sulfates générés au niveau dudit catalyseur d'oxydation (1), en tant que sulfates, mais est également capable de réduire les sulfates capturés en dioxydes de soufre, et est disposé sur un côté en aval par rapport audit catalyseur d'oxydation (1) dans le système d'échappement (30),

dans lequel ledit catalyseur de stockage et de réduction de sulfates (2) comprend un support de catalyseur poreux formé d'au moins un élément qui est sélectionné à partir du groupe composé de l'alumine, du titane, d'un mélange d'alumine et de silice, d'un mélange d'alumine et de titane, et d'au moins un ingrédient de stockage et de réduction de sulfate qui est sélectionné à partir du groupe composé du Ba et du Co.

6. Appareil selon la revendication 5, dans lequel ledit catalyseur d'oxydation (2) comprend un support de catalyseur poreux formé d'au moins un élément qui est sélectionné à partir du groupe composé de l'alumine, de la silice, d'un oxyde composite de silice et d'alumine, de zircone, de titane, et de zéolite et d'au moins un ingrédient de catalyseur qui est sélectionné à partir du groupe composé du platine, du rhodium, du palladium, du ruthénium et de l'iridium, et qui est chargé sur le support de catalyseur poreux.

7. Appareil selon l'une quelconque des revendications 5 et 6, dans lequel ledit ingrédient de catalyseur est chargé sur ledit support de catalyseur poreux en une quantité allant de 0,1 à 20 g par rapport à 1 L dudit catalyseur d'oxydation (1).

8. Appareil selon l'une quelconque des revendications 5 à 7, dans lequel ledit ingrédient de stockage et de réduction de sulfates est chargé sur ledit support de catalyseur poreux en une quantité allant de 0,05 à 2 mol par rapport à 1 L dudit catalyseur de stockage et de réduction de sulfates (2).

9. Appareil selon l'une quelconque des revendications 1 à 8, dans lequel ledit catalyseur d'oxydation (1) est formé sur un substrat de support unitaire sur un côté en amont de celui-ci dans le sens de circulation des gaz d'échappement ; et ledit catalyseur de stockage et de réduction de sulfates (2) est formé sur le substrat de support unitaire sur le côté en aval de celui-ci par rapport audit catalyseur d'oxydation (1).

10. Utilisation de l'appareil selon l'une quelconque des revendications 5 à 9 destiné à purifier les gaz d'échappement émis d'un moteur diesel, dans lequel :

lesdits sulfates sont réduits en dioxydes de soufre à une température supérieure à 500°C en utilisant ledit chauffage.

11. Utilisation de l'appareil selon l'une quelconque des revendications 1 à 4 destiné à purifier les gaz d'échappement émis d'un moteur diesel.

# FIG. 1

# FIG. 2